# EUROPÄISCHE PATENTANMELDUNG

(11) **EP 0 865 170 A1**
(43) Veröffentlichungstag der Anmeldung: **16.09.1998**
(21) Anmeldenummer: 98104055.3
(22) Anmeldetag: 06.03.1998
(51) Int. Cl.: H04B 5/00

(54) **Vorrichtung zur akustischen Wiedergabe drahtlos übertragener Audioinformationen aus einer HiFi-Anlage**

(30) Priorität: 14.03.1997 DE 19710750
(71) Anmelder: SIEMENS AKTIENGESELLSCHAFT, 80333 München (DE)
(72) Erfinder: Beckers, Michael, 46395 Bocholt (DE); Biedermann, Rolf, 48683 Ahaus (DE)

(57) **Zusammenfassung**

Die Erfindung betrifft eine Einrichtung zur akustischen Wiedergabe drahtlos übertragener Audioinformationen aus einer HiFi-Anlage mit einer zugeordneten Empfangseinrichtung. Erfindungsgemäß ist vorgesehen, daß die Empfangseinrichtung in der Weise ausgestaltet ist, daß digital codierte, drahtlos übertragene elektromagnetische Audioinformationen empfangen werden.

## Beschreibung

Die Erfindung betrifft eine Vorrichtung zur akustischen Wiedergabe drahtlos übertragener Audioinformationen aus einer HiFi-Anlage nach dem Oberbegriff des Anspruchs 1.

Es sind gemäß der DE-4 328 252 A1, US-4,621,374, US-5,483,367 und US-5,602,669 bereits schnurlose Kopfhörer mit einer Empfangseinrichtung zum Empfang von Audioinformationen bekannt, die mittels Infrarotstrahlung übertragen werden. Die Infrarot-Übertragung hat jedoch einen hohen Rauschpegel zur Folge und erweist sich in der Praxis als störempfindlich. Ferner sind Kopfhörer mit einer Empfangseinrichtung bekannt, die in analoger Form übertragene elektromagnetische Audioinformationen empfängt. Diese Form ist ebenfalls relativ störanfällig, wobei die Störungen unter anderem dadurch entstehen können, daß für unterschiedliche Empfangseinrichtungen bestimmte Audioinformationen auf eng benachbarten Frequenzen oder auf identischen Frequenzen übertragen werden.

Ausgehend von diesem Stand der Technik liegt der Erfindung die Aufgabe zugrunde, eine Vorrichtung der eingangs genannten Art anzugeben, die verbesserte Eigenschaften hat.

Erfindungsgemäß wird diese Aufgabe durch eine Vorrichtung gelöst, die in den Ansprüchen definiert ist.

Die Erfindung ist mit einer Mehrzahl von Vorteilen verbunden. Erfindungsgemäß läßt sich der Rauschpegel vermindern und die Übertragung weniger störempfindlich ausgestalten.

Eine vorteilhafte Ausführungsform der erfindungsgemäßen Vorrichtung, die z.B. ein Kopfhörer, ein Lautsprecher oder ein Verstärker ist, ist dadurch gekennzeichnet, daß die Empfangseinrichtung in der Weise ausgestaltet ist, daß drahtlos übertragene elektromagnetische Audioinformationen im DECT-Format (Digital Enhanced Cordless Telecommunications) empfangen werden. Damit läßt sich eine schnurlose digitale Audioübertragung in HiFi-Qualität realisieren, wobei das DECT-Spektrum insbesondere dann nicht zu stark belastet wird, wenn die Audioinformationen komprimiert übertragen werden. Die Verwendung des DECT-Formats ist unter anderem mit dem Vorteil verbunden, daß sich die Sendeeinichtung selbsttätig einen freien Übertragungskanal sucht ( 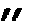 dynamic channel selection").

Vorteilhaft in diesem Zusammenhang ist weiterhin, daß sich DECT-Übertragungsstecken kostengünstig realisieren lassen.

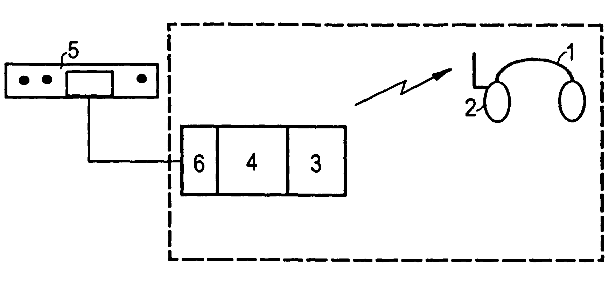

Die Erfindung wird nun anhand der Zeichnung beschrieben.

Der erfindungsgemäße Vorrichtung 1 zur akustischen Wiedergabe drahtlos übertragener Audioinformationen, die bei dem in der Zeichnung dargestellten Ausführungsbeispiel ein Kopfhörer 1 ist, ist eine Empfangseinrichtung 2 zugeordnet. Insbesondere ist die Empfangseinrichtung 2 in die Einrichtung 1 räumlich integriert. Die Empangseinrichtung 2 empfängt drahtlos übertragene Audioinformationen über z.B. eine Antenne. Diese Empfangseinrichtung 2 ist in der Weise ausgestaltet, daß digital codierte, drahtlos über-tragene elektromagnetische Audioinformationen, insbesondere im DECT-Format übertragene Audioinformationen empfangen und verarbeitet werden. Die im DECT-Format übertragenen Informationen sind mit einer Kennung (Adresse) der jeweiligen Empfangseinrichtung versehen.

Der Empfangseinrichtung 2 ist eine Sendeeinrichtung 3 zugeordnet, der eine Audioinformations-Kompressionseinrichtung 4 vorgeschaltet sein kann. Die Kompressionseinrichtung komprimiert die zu übertragenden Audioinformationen. Die Sendeeinrichtung 3 ist z.B. mit 2 Sendeantennen versehen und bildet aus den zu übertragenden Audioinformationen elektromagnetische Sendesignale.

Die Sendeeinrichtung 3, in der auch die Umsetzung der Audioinformationen in das DECT-Format vorgenommen werden kann, bzw. die vorgeschaltete Kompressionseinrichtung 4 sind direkt mit dem Ausgang einer HiFi-Anlage verbindbar. In Abhängigkeit davon, ob die betreffende HiFi-Anlage 5 an ihrem Ausgang Digital- oder Analog-Signale abgibt und in Abhängigkeit von dem schaltungstechnischen Aufbau der Kompressionseinrichtung 4 in Analog- bzw. Digitaltechnik ist zwischen Ausgang der HiFi-Anlage 5 und der Kompressionseinrichtung 4 ein Analog/Digitalwandler 6 zwischengeschaltet.

Die Datenkompressionseinrichtung 4 arbeitet auf der Grundlage von Kompressionsverfahren (z.B. ATRAC), wie sie bei der sogenannten Mini-Disk oder der sogenannten Digital-Compact-Cassette (DCC) zur Anwendung kommen. Die Empfangseinrichtung 2 nimmt die übertragenen Sendesignale auf und löst aus diesen Signalen die Audioinformationen, die von der nachgeschalteten Einrichtung 1 (z.B. Kopfhörer, Lautsprecher, Verstärker) akustisch wiedergegeben werden (Kopfhörer, Lautsprecher) bzw. für eine akustische Wiedergabe aufbereitet werden (Verstärker).

Bei dieser schaltungstechnischen Anordnung wird eine schnurlose digitale Audioinformationsübertragung in HiFi-Qualität realisiert.

## Patentansprüche

1. Vorrichtung (1) zur akustischen Wiedergabe drahtlos übertragener Audioinformationen aus einer HiFi-Anlage (5), mit einer zugeordneten Empfangseinrichtung (2), die die drahtlos übertragenen Audioinformationen empfängt,
**dadurch gekennzeichnet**, daß
die Empfangseinrichtung (2) in der Weise ausgestaltet ist, daß digital codierte, drahtlos übertragene, elektromagnetische Audioinformationen empfangen werden.

2. Vorrichtung nach Anspruch 1, **dadurch gekennzeichnet**, daß die Empfangseinrichtung (2) in der Weise ausgestaltet ist, daß im DECT-Format übertragene elektromagnetische Audioinformationen empfangen werden.

3. Vorrichtung nach einem der vorstehenden Ansprüche, **dadurch gekennzeichnet**, daß der Empfangseinrichtung (2) eine Sendeeinrichtung (3) zugeordnet ist, der eine Audioinformations-Kompressionseinrichtung (4) vorgeschaltet ist.

4. Vorrichtung nach Anspruch 3, **dadurch gekennzeichnet**, daß die Sendeeinrichtung (3) mit der HiFi-Anlage (5) verbindbar ist.

5. Empfangseinrichtung (2) für eine Einrichtung (1) zur akustischen Wiedergabe nach einem der vorstehenden Ansprüche.
